## Europäisches Patentamt

## European Patent Office

## Office européen des brevets

(11) Veröffentlichungsnummer: **0 096 313**
**B1**

(12) # EUROPÄISCHE PATENTSCHRIFT

(45) Veröffentlichungstag der Patentschrift:
**12.10.88**

(21) Anmeldenummer: **83105261.8**

(22) Anmeldetag: **27.05.83**

(51) Int. Cl.⁴: **B 60 J 3/02**

(54) **Sonnenblende.**

(30) Priorität: **04.06.82 DE 3221136**

(43) Veröffentlichungstag der Anmeldung:
**21.12.83 Patentblatt 83/51**

(45) Bekanntmachung des Hinweises auf die Patenterteilung:
**12.10.88 Patentblatt 88/41**

(84) Benannte Vertragsstaaten:
**AT DE FR GB NL SE**

(56) Entgegenhaltungen:
**DE-A-1 932 386**
**DE-A-2 249 780**
**DE-A-2 925 184**
**DE-C-947 049**

(73) Patentinhaber: **Iveco Magirus Aktiengesellschaft, Schillerstrasse 2, D-7900 Ulm/Donau (DE)**

(72) Erfinder: **Maier, Richard, Tomerdinger Weg 37, D-7901 Dornstadt (DE)**

(74) Vertreter: **Socha, Peter, Iveco Magirus AG Postfach 2740 Schillerstrasse 2, D-7900 Ulm (DE)**

EP 0 096 313 B1

## Beschreibung

Die Erfindung betrifft eine Sonnenblende, die in einem Fahrzeug, insbesondere in einem Fahrerhaus von Nutzfahrzeugen im Übergangsbereich zwischen Dach und einer Seitenwand über an einer Längskante angeordnete Gelenke um eine horizontale Achse zwischen einer oberen Nichtgebrauchslage und einer unteren Schutzlage schwenkbar und in Fahrzeuglängsrichtung verstellbar an einer Seitenwand gelagert ist.

Aus der DE-A-2 925 184 ist eine Sonnenblende der vorstehend genannten Art bekannt. Hierbei erfolgt die Lagerung der Sonnenblende an einer Seitenwand über einen Lagerbock, der aus einem oder zwei von der Seitenwand zum Innenraum hin geringfügig vorstehenden Tragarmen besteht, die zur Aufnahme der Sonnenblende zwei sich in Gegenrichtung ersteckende Gelenkzapfen aufweisen, an denen diese Sonnenblende mit einer Längskante um eine horizontale Achse schwenkbar gehalten ist. Das wandseitige Ende des Lagerbockes ist etwa T-förmig gestaltet und in einer an der Seitenwand befestigten Schiene in Fahrzeuglängsrichtung verschiebbar eingesetzt.

Bei dieser Anordnung der Sonnenblende erfolgt deren Fixierung in den einzelnen Schiebestellungen durch Reibschluß zwischen Tragarm und Führungsschiene. Dabei besteht jedoch die Gefahr, daß im Laufe der Zeit durch Verschleiß am Tragarm oder der Führungsschiene die Reibschlußverbindung locker wird, wodurch es zu ungewollten Verschiebungen der Sonnenblende innerhalb der Führungschiene kommen kann. Bedingt durch die lockerwerdende Führung können außerdem störende Flatterbewegungen an der Sonnenblende auftreten, die zusätzlich zu einer weiteren Verminderung der Reibschlußverbindung führen. Schließlich ist noch ein Nachteil darin zu sehen, daß beim Verschieben der Sonnenblende der Lagerbock innerhalb der Führungsschiene verkantet werden kann, so daß ein Verschieben der Sonnenblende nur durch feinfühlige Handhabung oder mit Gewalt möglich ist. Beide Bedienungsarten erfordern jedoch eine besondere Aufmerksamkeit der Bedienungsperson, wodurch diese vom Verkehrsgeschehen abgelenkt wird.

Ausgehend von dem bekannten Stand der Technik liegt daher der Erfindung die Aufgabe zugrunde, für eine Sonnenblende eine in Fahrzeuglängsrichtung verstellbare und um eine horizontale Achse schwenkbare Lagerung zu schaffen, die es ermöglicht, daß die Sonnenblende in die einzelnen unteren Schutzlagen auf einfache Weise und mühelos verstellt werden kann und daß darüber hinaus eine sichers erschütterungsfreie Haftung der Sonnenblende in den einzelnen unteren Schutzlagen erreicht wird.

Die Aufgabe ist erfindungsgemäß dadurch gelöst, daß die Sonnenblende mit ihrer gelenkseitigen Längskante an einem oder mehreren Schwenkarmen an der Seitenwand angelenkt und über diese zwischen zwei wandparallelen unteren Schutzlagen verschwenkbar ist.

Durch die Erfindung wird eine sichere Haftung der Sonnenblende in den einzelnen Schutzlagen an der Seitenwand sichergestellt und darüber hinaus ein müheloses Verschwenken der Sonnenblende ohne nennenswerten Kraftaufwand von einer Schutzlage in die andere erreicht. Außerdem ist von Vorteil, daß die Lagerung selbst über einen längeren Zeitraum keinem Verschleiß unterliegt, so daß ihre Funktion auch nach häufiger Benutzung nicht beeinträchtigt ist.

Gemäß den Merkmalen des Anspruches 2 ist eine besonders einfache Anlenkung der Sonnenblende an den Schwenkarmen gekennzeichnet. Die Merkmale des Anspruches 3 kennzeichnen eine besonders vorteilhafte und zweckmäßige Anlenkung der Sonnenblende.

Nach Anspruch 4 ist es möglich, eine handelsübliche Sonnenblende ohne bauliche Veränderungen an den Schwenkarmen anzubringen.

Durch Anspruch 5 ist eine Ausführung der Schwenkarme gekennzeichnet, die es ermöglicht, daß die Schwenkarme und die Scharniere gleichzeitig aus einem Bauteil gefertigt werden können.

Gemäß den Merkmalen der Ansprüche 6 und 7 wird eine sichere und doch auf einfache Weise lösbare Haftung der Sonnenblende in den einzelnen wandnahen Schutzlagen erreicht.

Schließlich ist durch Anspruch 8 eine andere haftende Verbindung der Sonnenblende an einer Seitenwand gekennzeichnet.

In den Zeichnungen ist ein Ausführungsbeispiel der Erfindung dargestellt.

Es zeigt:

Fig. 1    in einer perspektivischen Innenansicht den vorderen Eckbereich eines Fahrerhauses mit der an einer Seitenwand oberhalb eines Seitenfensters mittels der erfindungsgemäßen Vorrichtung angeordneten Sonnenblende.

Fig. 2    in ausgezogenen Linien die Sonnenblende in einer ersten wandnahen Schutzlage und durch gestrichelte Linien die Bewegung der Sonnenblende beim Verschwenken aus der ersten in die zweite Schutzlage.

Fig. 3    die Sonnenblende aus Fig. 2 in Richtung der Ansicht "A".

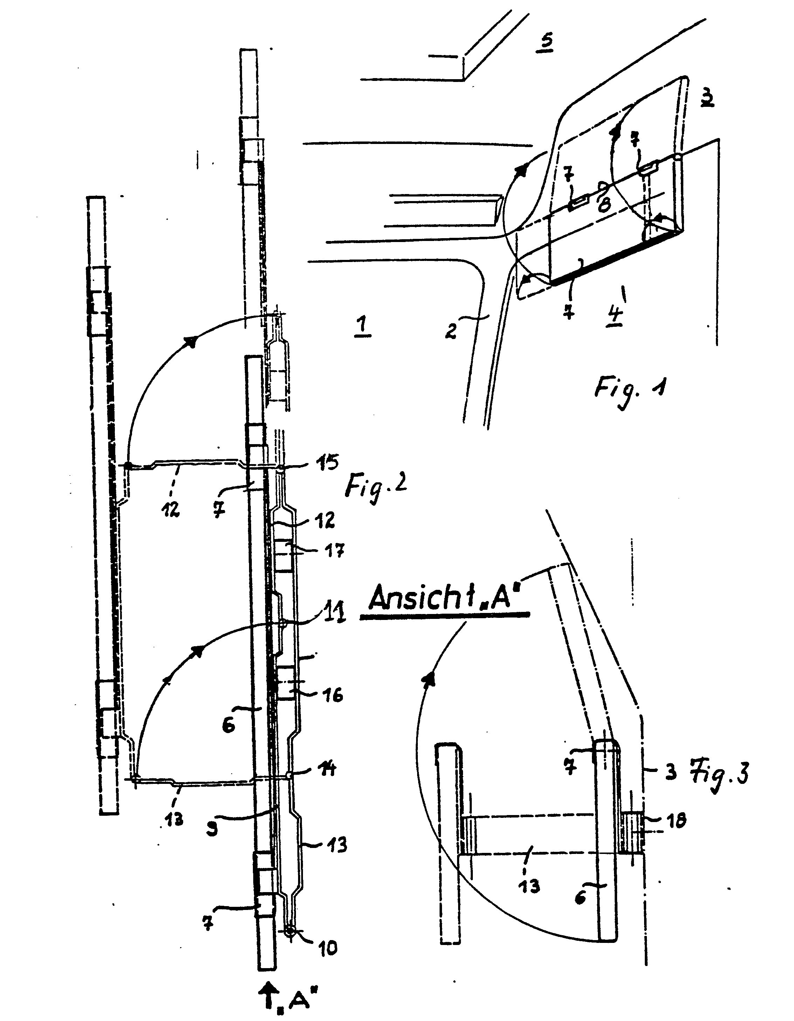

Figur 1 zeigt von einem Fahrerhaus eines Nutzfahrzeuges den vorderen seitlichen Eckbereich des Innenraumes, von dem mit 1 eine Windschutzscheibe, mit 2 der angrenzende vordere Eckpfosten, mit 3 ein Seitenwandteil, mit 4 das in dem Seitenwandteil 3 vorgesehene Seitenfenster und schließlich mit 5 das Dach des Fahrerhauses bezeichnet ist. Oberhalb des Seitenfensters 4 ist eine Sonnenblende 6 in einer Schutzlage heruntergeschwenkt dargestellt, die in Ablagestellung um eine horizontale Achse mittels Gelenke 7 nach oben, wie durch strichpunktierte Linien dargestellt, geschwenkt werden kann. Die Gelenke 7 sind dabei im Bereich der oberen Längskante 8 der Sonnenblende 6 angeordnet. Desweiteren ist durch gestrichelte Linien dargestellt, daß die Sonnenblende 6 in der heruntergeklappten Schutzlage in eine weitere zur Windschutzscheibe 1 hin versetzte Schutzlage schwenkbar ist. In dieser Lage befindet sich die vordere Kante der Sonnenblende 6 in Höhe des Eckpfostens 2 und deckt dabei zusammen mit der nicht dargestellten oberhalb der Windschutzscheibe 1 angeordneten Sonnenblende den vorderen oberen Eckbereich des Fahrerhauses gegen Einfallen des Sonnenlichtes ab. Die Gelenke 7 der Sonnenblende 6 sind an einer gemeinsamen Trägerplatte 9 befestigt, die ihrerseits über um senkrechte Achsen schwenkbare Scharniere 10 bzw. 11 an zwei Schwenkarmen 12 und 13 angelenkt ist. Mit ihren wandseitigen Enden sind die Schwenkarme 12 und 13 ebenfalls über um senkrechte Achsen schwenkbare Scharniere 14 und 15 an dem Seitenwandteil 3 befestigt. Die Anlenkung der Schwenkarme 12 und 13 am Seitenwandteil 3 sowie der Sonnenblende 6 erfolgt dabei in der Art eines Gelenkparallelogrammes. In der durch Voll-Linien dargestellten eingeklappten Stellung - die einer ersten Schutzlage entspricht - befinden sich beide Schwenkarme 12 und 13 in einer wandparallelen Lage. In dieser wandnahen Lage wird die Sonnenblende 6 gegenüber dem Seitenwandteil 3 durch Magnete (Magnetsteine 16 bzw. 17 fixiert. Die Magnetsteine 16 und 17 sind dabei an einer Blechleiste 18 befestigt, die ihrerseits mit dem Seitenwandteil 3 verbunden ist und außerdem die Scharniere 15 und 14 trägt. Aus der in Fig. 2 ersichtlichen eingeklappten momentanen Schutzlage kann die Sonnenblende durch Schwenken der Gelenkarme 12 und 13 in Pfeilrichtung in die durch gestrichelte Linien dargestellte zweite Schutzlage verschwenkt werden, in der sie dann ebenfalls über Magnetsteine 16 und 17 am Seitenwandteil 3 fixiert ist.

Anstelle der aus Blech hergestellten Schwenkarme ist es möglich, diese aus einem Kunststoffband herzustellen, wobei durch Ausfräsen von senkrecht verlaufenden Rillen an den Scharnierstellen gleichzeitig Knickstellen geschaffen werden, die die Scharniere bilden und durch die erreicht wird, daß die Schwenkarme und die Scharniere aus einem Kunststoffband hergestellt werden können. Außerdem kann anstelle der Magnetsteine 16 und 17 zur Sicherung der wandnahen Schutzlage der Sonnenblende 6 zwischen den Schwenkarmen 12 und 13 und dem Befestigungsstreifen 18 ein Klettband vorgesehen werden.

**Patentansprüche**

1. Sonnenblende (6), die in einem Fahrzeug, insbesondere in einem Fahrerhaus von Nutzfahrzeugen im Übergangsbereich zwischen Dach (5) und einer Seitenwand (3) über an einer Längskante (8) angeordnete Gelenke (7) um eine horizontale Achse zwischen einer oberen Nichtgebrauchslage und einer unteren Schutzlage schwenkbar und in Fahrzeuglängsrichtung verstellbar an einer Seitenwand (3) gelagert ist, <u>dadurch gekennzeichnet,</u> daß die Sonnenblende (6) mit ihrer gelenkseitigen Längskante (8) an einem oder mehreren Schwenkarmen (12 und 13) an der Seitenwand (3) angelenkt (10, 11 - 14, 15) und über diese zwischen zwei wandparallelen unteren Schutzlagen verschwenkbar ist.

2. Sonnenblende nach Anspruch 1, dadurch gekennzeichnet, daß die Verbindung der Gelenkarme (12 und 13) an der Seitenwand (3) und an der Sonnenblende (6) mittels um senkrechte Achsen schwenkbare Scharniere (10 und 11 bzw. 14 und 15) erfolgt.

3. Sonnenblende nach Anspruch 1 oder 2, gekennzeichnet durch zwei Gelenkarme (12 und 13), die in der Art eines Gelenkparallelogrammes am Seitenwandteil 3 und der Sonnenblende (6) angeordnet sind, so daß diese durch eine im wesentlichen wandparallele Schwenkbewegung aus der momentanen Schutzlage in die jeweils andere Schutzlage verschwenkbar ist.

4. Sonnenblende nach einem der Ansprüche 1 bis 3, dadurch gekennzeichnet, daß die Gelenke (7) der Sonnenblende (6) an einer gemeinsamen Trägerplatte (9) befestigt sind, die über die blendenseitigen Scharniere (10 und 11) an den Gelenkarmen (12 und 13) befestigt ist.

5. Sonnenblende nach einem der Ansprüche 1 bis 4, dadurch gekennzeichnet, daß die Trägerplatte (9) und/oder die Schwenkarme (12 und 13) aus einem Kunststoffband hergestellt sind und daß die Scharniere (14 und 15) als Kunststoff-Faltscharniere ausgebildet sind und gegebenenfalls mit dem Kunststoffband aus einem Stück bestehen.

6. Sonnenblende nach einem der Ansprüche 1 bis 5, dadurch gekennzeichnet, daß die in den verschiedenen Schutzlagen im wesentlichen in einer wandparallelen Lage befindlichen Schwenkarme (12 und 13) mittels Magnete (16 und 17) an dem Seitenwandteil (3) fixierbar sind.

7. Sonnenblende nach einem der Ansprüche 1 bis 6, dadurch gekennzeichnet, daß die Magnete an der Trägerplatte (9) oder in Höhe der Schwenkarme (12 und 13) an dem Seitenwandteil (3) befestigt sind.

8. Sonnenblende nach einem der Ansprüche 1 bis 5, dadurch gekennzeichnet, daß die Schwenkarme (12 und 13) in den einzelnen Schutzlagen an dem Seitenwandteil (3) mittels eines Klettbandes fixierbar sind.

## Claims

1. A sun visor (6) disposed in a vehicle, more particularly in the driver's cab of a commercial vehicle in the transition region between the roof (5) and a side wall (3) so as to be pivotable between a top inoperative position and a bottom protective position round a horizontal axis on hinges (7) disposed on a longitudinal edge (8) and so as to be adjustable in the longitudinal direction of the vehicle along a side wall (3), characterised in that the longitudinal edge (8) of the sun visor (6) on the hinge side is pivoted (10, 11, 14 - 15) on one or more arms (12, 13) on the side wall (3) and is pivotable thereon between two bottom protective positions parallel to the wall.

2. A sun visor according to claim 1, characterised in that the arms (12, 13) are connected to the side wall (3) and to the visor (6) by hinge joints (10, 11 and 14,15) pivotable around vertical axes.

3. A sun visor according to claim 1 or 2, characterised by two arms (12, 13) disposed so as to form a pivoting parallelogram on the side wall part (3) and the sun visor (6), so that the visor is pivotable so as to move substantially parallel to the wall, from the instantaneous protective position to the other protective position.

4. A sun visor according to any of claims 1 to 3, characterised in that the hinges (7) of the sun visor (6) are secured to a common bearing plate (9) secured to arms (12, 13) by hinge joints (10, 11) on the side of the visor.

5. A sun visor according to any of claims 1 to 4, characterised in that the bearing plate (9) and/or the arms (12, 13) are made from a plastics strip and the hinge joints (14, 15) are constructed as plastics folding hinges and, if required, are in one piece with the plastics strip.

6. A sun visor according to any of claims 1 to 5, characterised in that the arms (12, 13), which are in a position substantially parallel to the wall in the various protective positions, are securable by magnets (16, 17) to the side wall part (3).

7. A sun visor according to any of claims 1 to 6, characterised in that the magnets are secured to the bearing plate (9) or to the side wall part (3) at the level of the arms (12, 13).

8. A sun visor according to any of claims 1 to 5, characterised in that the arms (12, 13) are adapted to be secured by a burr strip in the individual protective positions on the side wall part (3).

## Revendications

1. Pare-soleil 6 qui dans un véhicule automobile, en particulier dans la cabine du conducteur d'un véhicule utilitaire, est supporté dans la zone de transmission entre le pavillon (5) et une paroi latérale 3 par une articulation (7) située sur une arête longitudinale 8 pouvant pivoter autour d'un axe horizontal entre une position supérieure de non utilisation et une position inférieure de protection et déplaçable dans le sens de la longueur du véhicule, caractérisé en ce que le pare-soleil 6 peut pivoter par ses arêtes longitudinales (8) côté articulation par un ou plusieurs bras articulés (12) et (13) articulés sur la paroi latérale (3) et par ceux-ci (10), (11), (15) entre deux positions inférieures de protection parallèles à la paroi.

2. Pare-soleil selon la revendication 1, caractérisé en ce que la liaison des bras articulés (12) et (13) sur la paroi latérale (3) et sur le pare-soleil (3) a lieu au moyen de charnières (10,11) et (14) et (15) pouvant pivoter autour d'axes perpendiculaires.

3. Pare-soleil selon la revendication 1 ou la revendication 2, caractérisé par deux bras articulés (12) et (13) qui sont placés selon la technique du parallélogramme déformable sur l'élément de paroi latérale (3) et le pare-soleil (6) de sorte que celui-ci puisse pivoter dans un mouvement pratiquement parallèle à la paroi d'une position de protection instantanée dans chacune des autres positions de protection.

4. Pare-soleil selon l'une des revendications 1 à 3, caractérisée en ce que les articulations (7) du pare-soleil (6) sont fixées sur une plaque support commune (9) qui est fixée par des charnières (10) et (11) du côté écran sur les bras articulés (12) et (13).

5. Pare-soleil selon l'une des revendications 1 à 4, caractérisé en ce que la plaque support 9 et/ou les bras articulés (12, 13) sont fabriqués à partir d'une bande de matière synthétique et que les charnière (14) et (15) sont sous forme de charnières pliantes en matière synthétique et sont constituées éventuellement par la banque de matière synthétique en une seule pièce.

6. Pare-soleil selon l'une des revendications 1 à 5, caractérisé en ce que les bras articulés (12) et (13) se trouvant en une position parallèle à la paroi peuvent être fixés dans les diverses positions de protection par des aimants (16) et (17) sur l'élément de paroi latéral (3).

7. Pare-soleil selon l'une des revendications 1 à 6, caractérisé en ce que les aimants (16) et (17) sont fixés sur la plaque support (9) ou en haut des bras articulés (12) et (13) sur l'élément de paroi latérale (3).

8. Pare-soleil selon l'une des revendications 1 à 7, caractérisé en ce que les bras articulés (12) et (13) peuvent être fixés dans chaque position de protection sur l'élément de paroi latérale (3) au moyen d'une bande adhésive.

**5**

**1**

**2**

**7**

**7**

**8**

**7**

**4**

**3**

**_Fig. 1_**

**15**

**_Fig. 2_**

**12**

**7**

**12**

**17**

**11**

**16**

**6**

**14**

**13**

**5**

**13**

**7**

**10**

↑ "A"

**_Ansicht „A"_**

**7**

**3** **_Fig. 3_**

**18**

**13**

**6**